# EUROPÄISCHE PATENTSCHRIFT

(11) **EP 1 915 765 B1**
(45) Veröffentlichungstag und Bekanntmachung des Hinweises auf die Patenterteilung: **04.08.2010**
(21) Anmeldenummer: 06776736.8
(22) Anmeldetag: 10.08.2006
(51) Int. Cl.: H01H 1/027, B22F 1/02

(54) **WERKSTOFF AUF DER BASIS SILBER-KOHLENSTOFF UND VERFAHREN ZU DESSEN HERSTELLUNG**
SILVER/CARBON-BASED MATERIAL AND METHOD FOR PRODUCING THE SAME
MATERIAU A BASE DE CARBONE-ARGENT, ET PROCEDE POUR LE PRODUIRE

(30) Priorität: 12.08.2005 DE 102005038233
(43) Veröffentlichungstag der Anmeldung: 30.04.2008
(73) Patentinhaber: Umicore AG & Co. KG, 63457 Hanau-Wolfgang (DE)
(72) Erfinder: KEMPF, Bernd, 63839 Kleinwallstadt (DE); WOLMER, Roger, 63457 Hanau-Grossauheim (DE); BOEHME, Carsten, 63791 Karben (DE); ROTH, Werner, 63594 Hasselroth (DE); KOFFLER, Andreas, 61130 Niederau (DE)
(74) Vertreter: Herrmann, Reinhard
(86) Internationale Anmeldenummer: PCT/EP2006/007915
(87) Internationale Veröffentlichungsnummer: WO 2007/020007

(56) Entgegenhaltungen:
- DE-A1- 10 017 282
- US-A- 2 729 559

## Beschreibung

Die Erfindung betrifft ein Verfahren zur Herstellung eines Werkstoffs auf der Basis Silber-Kohlenstoff sowie einen daraus erhältlichen Werkstoff. Die Verwendung des Werkstoffs wird ebenfalls beschrieben.

Werkstoffe für elektrische Kontakte der Energietechnik bestehen in der Regel aus Silber und bestimmten metallischen und/oder nichtmetallischen bzw. oxidischen Zusätzen. Solche Werkstoffe werden überwiegend auf pulvermetallurgischem Wege hergestellt. Dabei werden die Komponenten in Pulverform miteinander vermischt.

Das Anwendungsprofil derartiger Kontaktwerkstoffe wird maßgeblich vom Schaltgerätetyp, der Höhe des Schaltstromes und der elektrischen Belastungsart bestimmt. Aus den Einsatzbedingungen leiten sich generelle Forderungen nach niedrigem elektrischen Verschleiß, also hoher Abbrandfestigkeit, und geringer Verschweißkraft bei gleichzeitig niedrigem Kontaktwiderstand ab.

Kontaktwerkstoffe auf der Basis Silber-Kohlenstoff, insbesondere Silber-Graphit, haben besonders im Bereich der Schutzschalter in der Niederspannungsenergietechnik Einsatz gefunden. Hier kommt es speziell auf höchste Sicherheit gegen das Verschweißen der Kontaktstücke an.

Die Verbesserung der Verarbeitungs- und Kontakteigenschaften dieser Werkstoffe ist ständige Motivation für weitere Werkstoff- und Technologieentwicklungen. Im Vordergrund stehen dabei die Optimierung der beiden Schalteigenschaften Abbrandfestigkeit und Verschweißfestigkeit. Diese sind eigentlich bezüglich des Kohlenstoffgehaltes gegenläufig. Das heißt, mit steigendem Kohlenstoffgehalt wird in der Regel der Schutz gegen Verschweißen besser, wobei die Abbrandfestigkeit abnimmt (E. Vinaricky "Elektrische Kontakte, Werkstoffe und Anwendungen"; 2. Auflage, Springer Verlag; 2002; S. 251-255).

Der Kohlenstoffzusatz bewirkt außerdem eine mechanische Verfestigung des Materials, so dass mit steigendem Kohlenstoffgehalt die Herstellbarkeit und Verarbeitbarkeit des Werkstoffs schwieriger wird. Dieser Effekt tritt insbesondere auf, wenn eine pulvermetallurgische Mischung der beiden Komponenten durch Strangpressen verdichtet und umgeformt werden soll. Bei Kohlenstoffgehalten von mehr als etwa 5 % ist der Werkstoff dann nur noch sehr schwierig strangpressbar.

EP-A-311 134 offenbart einen pulvermetallurgisch hergestellten Werkstoff für elektrische Kontakte aus Silber mit 2 bis 7 Gew.-% Graphit und einen speziellen die Festigkeit des Werkstoffs steigernden Zusatz.

In EP-A-736 885 wird ein Werkstoff für elektrische Kontakte aus Silber-Kohlenstoff beschrieben, der verbesserte Abbrandeigenschaften aufweist. Dieser Werkstoff enthält Kohlenstoff ausschließlich in Form von Ruß mit einer mittleren Primärteilchengröße von weniger als 150 Nanometer. Der Werkstoff wird durch kaltisostatisches Pressen und Sintern hergestellt.

WO 92/18995 betrifft einen bestimmten Verbundwerkstoff für elektrische Kontakte. Der Verbundwerkstoff ist auf der Basis Silber und enthält 0,5 bis 10 Gew.-% Kohlenstoff, wobei Kohlenstoffpulver in Kombination mit Kohlenstoffasern im Massenverhältnis von 10:1 bis 1:10 zusammen mit der Silberkomponente pulvermetallurgisch zu einem Werkstoff verarbeitet werden. Im Mittel ist die Länge der Kohlenstoffasern mehr als das Doppelte des Durchmessers der Kohlenstoffpulver-Teilchen.

Einen weiteren Verbundwerkstoff für elektrische Kontakte ist in EP-A-729 162 offenbart. Es wird unter Verwendung von Kohlenstoffasern hergestellt, die einem speziellen Zerkleinerungsverfahren unterworfen werden.

Bei den vorstehend beschriebenen Druckschriften wurde der Werkstoff pulvermetallurgisch hergestellt. In dem chinesischen Patent CN-A-1396025 wird ein chemischreduktives Verfahren zur Herstellung von Silber-Graphit-Material vorgestellt. Bei diesem Verfahren wird Graphit-Nanopulver mit einer Größe von etwa 20 nm eingesetzt. Das Graphitpulver wird in ein Reaktionsgefäß gegeben und mit Silbernitratlösung vermischt. Anschließend wird Hydrazinhydratlösung zugegeben, so dass sich eine Silberschicht auf das Graphit-Nanopulver abscheidet. Das mit einer Silberschicht überzogene Graphit-Nanopulver wird anschließend über Einzelpressen und Sintern weiterverarbeitet. Dieses Verfahren hat den Nachteil, dass das verwendete Hydrazinhydrat gesundheitlich bedenklich ist und folglich für die großtechnische Anwendung nicht wünschenswert ist. Die vorliegenden Erfinder haben zudem festgestellt, dass der mit diesem Verfahren erhaltene Werkstoff nicht ausreichend feindispers und homogen ist. Des Weiteren weist der Werkstoff eine zu hohe Verfestigung auf, so dass die Verarbeitung durch Strangpressen nicht bzw. nur unter aufwändigen Bedingungen möglich ist. Die in CN-A-1396025 vorgeschlagene Verarbeitung durch Einzelpressen ist aus ökonomischer Hinsicht im industriellen Maßstab meistens weniger wünschenswert.

In DE-A-100 17 282 ist ein bestimmtes zweidüsiges Fällungsverfahren zur Herstellung von Verbundpulver beschrieben. Bei den Verbundpulvem handelt es sich im Gegensatz zu den erfindungsgemäßen Werkstoffen nicht um Werkstoffe auf der Basis Silber-Kohlenstoff sondern um Werkstoffe auf der Basis Silber-Zinnoxid. Silber-Zinnoxid- und allgemeiner Silber-Oxid-Kontaktwerkstoffe werden hauptsächlich für an Luft schaltende Schütze der Niederspannungs- und Starkstromtechnik eingesetzt. Hauptzielsetzung ihrer Funktion ist das Sicherstellen von sehr vielen Schaltzyklen, z. B. für eine Motorsteuerung. Werkstoff und Schaltgerät sind so beschaffen, dass je nach Schaltbedingungen mehrere zehntausend (AC4 Schaltverhalten) bis Millionen Schaltzyklen (AC3 bzw. AC1 Schaltverhalten) möglich sind. Entsprechend müssen diese Werkstoffe gutes Abbrandverhalten und eine akzeptable Sicherheit gegen Verschweißen aufweisen.

Werkstoffe auf der Basis Silber-Kohlenstoff werden dagegen ganz überwiegend in Schutzschaltern (z. B. Leitungsschutzschalter, Motorschutzschalter, Leistungsschalter) der Niederspannungsenergietechnik eingesetzt. Die Schalter dienen hier der Sicherheit von Personen und Anlagen. Im Fehlerfall, z. B. Kurzschluss, werden hier höchste Anforderungen an die Verschweißsicherheit gestellt, d.h. sie dürfen niemals verschweißen. Da die Schalter nur im Notfall auslösen sollen, ist hier eine deutlich geringere Schaltspielzahl akzeptiert. Dies kann je nach Schaltbedingung nur einige Dutzend, einige hundert bis maximal einige tausend Schaltzyklen bedeuten. Häufig werden asymmetrische Werkstoffpaarungen verwendet, um Eigenheiten der Konstruktion und wirtschaftlichen Aspekten Rechnung zu tragen. Dies sind Werkstoffpaarungen wie AgC gegen Cu, AgW, Ag-Metalloxid oder AgNi. Eine Vergleichbarkeit mit Silber-Zinnoxid-Werkstoffen ist daher nicht gegeben.

US 2 729 559 beschreibt ein Verfahren zur Herstellung eines Werkstoffs auf der Basis Silber-Kupfer-Kohlenstoff in dem eine Lösung eines Silberverbindung Kupferbeschichtetem Graphitpulver zugeführt wird.

Es war eine Aufgabe der vorliegenden Erfindung Werkstoffe auf der Basis Silber-Kohlenstoff bereitzustellen, die eine verbesserte Verschweißbeständigkeit, Abbrandfestigkeit und/oder Verarbeitbarkeit aufweisen.

Dementsprechend betrifft die Erfindung ein Verfahren zur Herstellung eines Werkstoffs auf der Basis Silber-Kohlenstoff umfassend die Schritte:
(i) Bereitstellen einer Suspension von Kohlenstoff-Teilchen; und
(ii) Zuführen einer Lösung einer Silberverbindung und eines Reduktionsmittels, so dass ein Silber enthaltender Niederschlag auf die Kohlenstoff-Teilchen abgeschieden wird,
wobei die Kohlenstoff-Teilchen einen mittleren Durchmesser von 200 nm oder größer aufweisen.

Des Weiteren betrifft die Erfindung ein mit diesem Verfahren erhältlichen Werkstoff sowie die Verwendung des Werkstoffs in Schutzschaltern für die Niederspannungsenergietechnik.

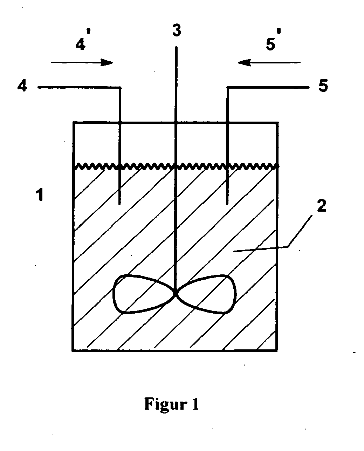

Figur 1 zeigt eine schematische Darstellung eines Apparats, der in einer bevorzugten Ausführungsform des erfindungsgemäßen Verfahrens verwendet werden kann.

In einem Reaktionsbehälter (1) wird eine Suspension von Kohlenstoff-Teilchen (2) vorgelegt. Diese wird durch einen Rührer (3) intensiv durchmischt. Mittels zweier getrennter Zuleitungen (4; 5), deren Düsen sich unter dem Flüssigkeitsspiegel der Suspension (2) befinden, wird dieser simultan jeweils eine Lösung der Silberverbindung (4') und Reduktionsmittel (5') zugeführt, wodurch Silber enthaltender Niederschlag auf die suspendierten Kohlenstoff-Teilchen abgeschieden wird.

Bei dem erfindungsgemäßen Verfahren wird zunächst eine Suspension von Kohlenstoff-Teilchen bereitgestellt. Die Kohlenstoff-Teilchen sind nicht besonders beschränkt. Es können alle Kohlenstoff-Teilchen verwendet werden, die üblicherweise bei Werkstoffen auf der Basis Silber-Kohlenstoff eingesetzt werden. Bevorzugt werden sie aus Graphitpulver, Kohlenstoffasern und Ruß sowie Kombinationen hiervon ausgewählt, wobei Graphitpulver und Kohlenstoffasern besonders bevorzugt sind. Die Kohlenstoffteilchen weisen bevorzugt einen mittleren Durchmesser von 500 bis 15 000 nm, stärker bevorzugt von 2000 nm bis 7000 nm auf.

Die Kohlenstoff-Teilchen können beispielsweise in kugelförmige und faserförmige Kohlenstoff-Teilchen unterteilt werden. Kugelförmige Kohlenstoff-Teilchen, wie etwa Graphitpulver und Ruß, weisen in der Regel eine im wesentlichen kugelförmige Gestalt auf. Hierbei bedeutet "kugelförmig", das die Teilchen im wesentlichen gleiche Längenausdehnungen in allen drei Raumrichtungen aufweisen. Der mittlere Durchmesser der kugelförmigen Kohlenstoff-Teilchen beträgt 200 nm oder größer. Im Unterschied dazu stehen faserförmige Kohlenstoff-Teilchen wie Kohlenstoffasern. Faserförmige Kohlenstoff-Teilchen sind hier definiert, als Teilchen, die in einer Raumrichtung eine größere Ausdehnung als in den anderen beiden Raumrichtungen aufweisen. Typischerweise weist die Faserlänge gegenüber dem Faserdurchmesser ein Verhältnis von mindestens 2:1, bevorzugt mindestens 5:1 auf. Die maximale Faserlänge beträgt beispielsweise 20:1 im Verhältnis zum Faserdurchmesser. Der mittlere Durchmesser (Faserdurchmesser) der faserförmigen Kohlenstoff-Teilchen beträgt 200 nm oder größer. Typische faserförmige Kohlenstoff-Teilchen besitzen einen Durchmesser von 0,5 bis 30 µm, bevorzugt von 1 bis 20 µm, besonders bevorzugt von 3 bis 10µm und weisen jeweils entsprechende Faserlängen auf.

In einer Ausführungsform sind die Kohlenstoff-Teilchen ein Gemisch aus Graphitpulver und/oder Ruß : Kohlenstoffasern in einem Verhältnis von 20 : 1 zu 1 : 20. Bevorzugt besteht das Gemisch aus 100 Gew.-% bis 98 Gew.-% Graphitpulver und 0 Gew.-% bis 2 Gew.-% Ruß (bezogen auf das Gesamtgewicht von Graphitpulver und Ruß) in Kombination mit Kohlenstoffasern. Dies ist vorteilhaft, wenn die Abbrandfestigkeit und Verschweißbeständigkeit für ein spezielles Schaltgerät aufeinander abgestimmt werden müssen. In einer anderen Ausführungsform wird nur Graphitpulver als Kohlenstoff-Teilchen eingesetzt. Dies ist von Interesse, wenn eine optimale Verschweißsicherheit erreicht werden soll. In einer dritten Ausführungsform werden nur Kohlenstoffasern als Kohlenstoff-Teilchen verwendet. Hierdurch kann die Abbrandfestigkeit gesteigert werden.

Die Kohlenstoff-Teilchen sind in einer Flüssigkeit suspendiert. Die Art der Flüssigkeit ist nicht besonders beschränkt. Es sollte jedoch weder mit den Kohlenstoff-Teilchen, der Silberverbindung, dem Reduktionsmittel oder dem Silber enthaltenden Niederschlag reagieren. Beispiele geeigneter Flüssigkeiten sind Wasser, geeignete organische Lösungsmittel (z.B. Alkohole) und Kombinationen hiervon. Des Weiteren können Benetzungshilfsmittel, wie beispielsweise Tenside, eingesetzt werden, um die Suspension der Kohlenstoff-Teilchen zu erleichtern. Bevorzugt wird Wasser verwendet.

Die Konzentration der Kohlenstoff-Teilchen in der Suspension ist ebenfalls nicht besonders beschränkt. Sie wird in der Regel so gewählt, dass die Suspension eine geeignete Viskosität aufweist und die nachfolgende Reduktion vorteilhaft abläuft. Ein zu hoher Flüssigkeitsanteil sollte allerdings vermieden werden, da die Flüssigkeit wieder entfernt werden muss. Die optimale Konzentration kann vom Fachmann problemlos geeignet gewählt werden. Sie liegt bevorzugt im Bereich von 0,1 bis 25 Gew.-% Kohlenstoff-Teilchen in der Suspension.

Um einen Silber enthaltenden Niederschlag auf die Kohlenstoff-Teilchen abzuscheiden, wird eine Lösung einer Silberverbindung und ein Reduktionsmittel zu der Suspension von Kohlenstoff-Teilchen gegeben. Die Lösung der Silberverbindung kann vor, nach oder gleichzeitig mit dem Reduktionsmittel zu der Suspension von Kohlenstoff-Teilchen zugegeben werden. Ein bevorzugtes Zugabeverfahren ist in DE-A-100 17 282 beschrieben. Das beschriebene Verfahren betrifft die chemisch-reduktive Fällung von Silber enthaltendem Niederschlag auf Zinnoxidteilchen. Es kann jedoch für die chemisch-reduktive Fällung von Silber enthaltendem Niederschlag auf Kohlenstoffteilchen analog eingesetzt werden.

Die verwendete Silberverbindung ist nicht besonders beschränkt und kann beispielsweise jedes lösliche Silbersalz sein. Beispiele hierfür sind Nitrate, Acetate, Carbonate, Citrate und Oxalate. Bevorzugt werden Nitrate verwendet. Die verwendete Silberverbindung wird vorzugsweise in Wasser oder einem geeigneten organischen Lösungsmittel (z.B. Alkohol) gelöst. In der Regel wird Wasser als Lösungsmittel verwendet.

Der Silber enthaltende Niederschlag ist vorzugsweise metallisches Silber.

Als Reduktionsmittel kommen alle Verbindungen in Frage, die die Silberverbindung reduzieren können. Typische Beispiele sind Ascorbinsäure, Zitronensäure, Oxalsäure, Ameisensäure und Hydroxylamin. Das Reduktionsmittel kann ebenfalls in Wasser oder einem geeigneten organischen Lösungsmittel (z.B. Alkohol) gelöst und in gelöster Form zugeführt werden.

Um eine gleichmäßige Auffällung von Silber enthaltendem Niederschlag auf die Kohlenstoff-Teilchen zu erreichen, werden die Silberverbindung und das Reduktionsmittel zweckmäßigerweise gleichzeitig aber unter getrennter Zuführung und in stöchiometrisch äquivalenten Mengen kontinuierlich über den Reduktionsverlauf hinweg zugegeben. Eine intensive Durchmischung ist während der Reduktion ebenfalls vorteilhaft. Die Zuführung erfolgt vorteilhafterweise unter der Flüssigkeitsoberfläche.

Die Anteile an Silberverbindung und Kohlenstoff-Teilchen richten sich nach dem Einsatzzweck des Werkstoffs und können von dem Fachmann geeignet gewählt werden. Vorteilhafterweise sind im Werkstoff 0,5 bis 12 Gew.-%, bevorzugt 1 bis 12 Gew.-%, stärker bevorzugt 2 bis 10 Gew.-%, noch stärker bevorzugt von 2 bis 8 Gew.-%, Kohlenstoff enthalten. Im Werkstoff können weitere Komponenten oder Verunreinigungen in einer Menge von bis zu 1 Gew.-% enthalten sein. Die restlichen Anteile im Werkstoff sind Silber.

Das erfindungsgemäße Verfahren erlaubt die Herstellung von Werkstoffen auf der Basis Silber-Kohlenstoff. Mit dem erfindungsgemäßen Verfahren kann eine homogenere Verteilung der Kohlenstoff-Teilchen als bei üblichen pulvermetallurgischen Mischverfahren erzielt werden. Dies ist besonders vorteilhaft bei schwer zu mischenden faserförmigen oder sehr feinen Teilchen. Des Weiteren wird eine höhere Duktilität erzielt, so dass die Verarbeitbarkeit beispielsweise beim Strangpressen und beim nachträglichen Verformen erleichtert wird. Ein weiterer Vorteil ist, dass mit dem erfindungsgemäßen Verfahren im Vergleich zu Verfahren, die auf pulvermetallurgischem Mischen beruhen, höhere Füllgrade erreicht werden können. Folglich ist eine Einsparung am Edelmetall Silber möglich. Außerdem wird ein besseres Schaltverhalten in Schutzschaltern beobachtet verglichen mit Werkstoffen, die mittels pulvermetallurgischem Mischen hergestellt werden.

Die mit dem Silber enthaltenden Niederschlag beschichteten Kohlenstoff-Teilchen können anschließend vom Lösungsmittel separiert, ggf. getrocknet und dann weiterverarbeitet werden. Obwohl Einzelsintern möglich ist, ist dies aus ökonomischen Gründen nicht bevorzugt. In einer bevorzugten Ausführungsform werden die beschichteten Kohlenstoff-Teilchen kaltisostatisch gepresst, gesintert und stranggepresst. Es kann jedoch jedes andere bekannte Verfahren zur Weiterverarbeitung angewendet werden.

Typische Bedingungen für das kaltisostatische Pressen sind 60 bis 90 MPa. Das Sintern wird typischerweise bei 800 bis 900 °C unter Schutzgas wie N₂/H₂ (50:50) durchgeführt. Anschließend wird Strangpressen durchgeführt. Dazu werden Bolzen über eine Induktionsheizung vor dem Pressen beispielsweise auf 750 bis 850 °C vorgewärmt und dann unmittelbar in den vorgeheizten Rezipienten (z.B. 400 bis 500 °C) eingebracht und durch die gewählte Matrize in der definierten Form ausgepresst.

Die nach dem erfindungsgemäßen Verfahren hergestellten Werkstoffe zeichnen sich durch eine besonders homogene und disperse Verteilung aus. Des Weiteren weisen sie überraschend eine ausgezeichnete Verschweißbeständigkeit bei gleichbleibendem oder ggf. besserer Abbrandfestigkeit und gutem Verarbeitungsverhalten auch bei höheren Kohlenstoffgehalten auf.

Die erhaltenen Werkstoffe auf der Basis Silber-Kohlenstoff können in allen Einsatzgebieten verwendet werden, in denen bisher Werkstoffe auf der Basis Silber-Kohlenstoff eingesetzt werden. Sie sind jedoch besonders für Schutzschalter in der Niederspannungsenergietechnik geeignet.

### BEISPIELE

Die folgenden Beispiele sollen die Erfindung erläutern. Sie sollen jedoch nicht als Einschränkung angesehen werden. Vielmehr ist der Schutzumfang durch die Ansprüche bestimmt.

Es werden die folgenden Abkürzungen verwendet:
- ES: Einzelsintern
- NCF: Nasschemische Fällung
- SP: Strangpressen

### Beispiel 1

Werkstoff A wird als Vergleich über Strangpressen hergestellt.

19 kg Silberverdüsungspulver mit einem Teilchendurchmesser von weniger als 63 µm wurde mit 1 kg Graphitpulver (d₅₀ 4,4 µm) trocken gemischt. Die Mischung wurde anschließend kaltisostatisch mit einem Pressdruck von 60 MPa zu Bolzen gepresst, unter H₂/N₂ (50:50) Schutzgas gesintert und nach induktivem Vorwärmen des Bolzens auf 780°C stranggepresst. Aus den stranggepressten Drähten wurden die Schaltproben so herausgearbeitet, dass die Schaltoberfläche senkrecht zur Strangpressrichtung stand. Damit standen die durch das Strangpressen faserartig auseinander gezogenen Graphitteilchenagglomerate senkrecht zur Schaltoberfläche. Bei Agglomeraten bezieht sich der mittlere Durchmesser im wesentlichen auf den mittleren Durchmesser der Teilchen, aus denen die Agglomerate zusammengesetzt sind. Zur Erzeugung einer löt- und schweißbaren Schicht wurden die Teile ca. 15 min bei 520 °C an Luft ausgebrannt und anschließend durchgesägt, so dass eine nicht ausgebrannte Schaltoberfläche zur Verfügung stand.

### Beispiel 2

Die erfindungsgemäßen Werkstoffe B, C, D, E und I wurden über chemisch-reduktive Fällung und Strangpressen hergestellt.

### Werkstoff B

Zur Herstellung einer 1,5 kg Charge eines Verbundpulvers mit 5 Gew.-% Kohlenstoffanteil wurden 2244g Silbernitrat, 75g Graphitteilchen (d₅₀ = 4,4 µm) und 1186,6g Ascorbinsäure eingesetzt. Die Graphitteilchen wurden mit Hilfe eines Dispergators in destilliertem Wasser suspendiert und danach in ein Reaktionsgefäß überführt. Das Silbernitrat wurde als 3,5 molare Lösung und die Ascorbinsäure als 1,7 molare Lösung angesetzt. Durch gleichzeitige und gleichmäßige Zugabe stöchiometrischer Mengen durch zwei getrennte Zuführungen wie in Figur 1 schematisch dargestellt und unter gleichzeitiger intensiver Durchmischung mittels eines Hochenergierührsystems wurde metallisches Silber mit einer konstanten Rate von ca. 130 g/min auf die Graphitteilchen niedergeschlagen. Die so hergestellten beschichteten Graphitteilchen wurden mittels einer Nutsche von der Flüssigkeit getrennt, gewaschen, getrocknet und auf 250 µm vorgesiebt. Die Weiterverarbeitung erfolgte wie in Beispiel 1 über Strangpressen.

Auch die Probennahme der Schaltproben erfolgte wieder so, dass die Schaltoberfläche senkrecht zur Strangpressrichtung stand. Aufgrund der wirklich einzeln eingebetteten Partikeln war hier aber das Gefüge so homogen, dass eine faserige Ausrichtung der Graphitteilchen nahezu nicht zu erkennen war.

### Werkstoffe C, D und E

Die Werkstoffe C, D und E wurden wie Werkstoff B hergestellt mit dem Unterschied, dass andere Kohlenstoffgehalte bzw. Kohlenstofftypen verwendet wurden. Werkstoff C enthielt 6 Gew.-% Graphitteilchen, Werkstoff D enthielt 4 Gew.-% Graphitteilchen und 2 Gew.-% Kohlenstoffasern und Werkstoff E enthielt 7 Gew.-% Graphitteilchen.

### Werkstoff I

Der Werkstoff I wurde wie Werkstoff B hergestellt mit dem Unterschied, dass bei der Probennahme der Schaltproben die Schaltoberfläche parallel zur Strangpressrichtung ausgerichtet war.

### Beispiel 3

Der Werkstoff F wurde als Vergleich über Einzelsintern hergestellt.

2 kg Silberverdüsungspulver mit einem Teilchendurchmesser von weniger als 63 µm wurde mit 100 g Graphitpulver (d₅₀ = 4,4 µm) trocken gemischt. Die Mischung wurde anschließend einzelgesintert. Hierzu wurde die Pulvermischung in entsprechende Pressformen gefüllt, gepresst (ca. 200 MPa) und unter Schutzgasatmosphäre gesintert (Sintertemperatur: 880 °C; t = 3 h, Atmosphäre N₂/H₂ 80/20; anschließend Kalibrierpressung bei ca. 800 MPa). Zur Erzeugung einer löt- und schweißfähigen Schicht wurde hier zunächst eine reine Silberschicht von ca. 10 % der Gesamtprobenmenge in die Pressform eingefüllt. Anschließend wurde die Pulvermischung zugegeben.

### Beispiel 4

Die erfindungsgemäßen Werkstoffe G und H wurden über chemisch-reduktive Fällung und Einzelsintern hergestellt.

### Werkstoff G

Zur Herstellung einer 1,5 kg Charge eines Verbundpulvers mit 5 Gew.-% Kohlenstoffanteil wurden 2244 g Silbernitrat, 75 g Graphitteilchen (d₅₀ = 4,4 µm) und 1186,6 g Ascorbinsäure eingesetzt. Die Graphitteilchen wurden mit Hilfe eines Dispergators in destilliertem Wasser suspendiert und danach in ein Reaktionsgefäß überführt. Das Silbernitrat wurde als 3,5 molare Lösung und die Ascorbinsäure als 1,7 molare Lösung angesetzt. Durch gleichzeitige und gleichmäßige Zugabe stöchiometrischer Mengen durch zwei getrennte Zuführungen wie in Figur 1 schematisch dargestellt und unter gleichzeitiger intensiver Durchmischung mittels eines Hochenergierührsystems wurde metallisches Silber mit einer konstanten Rate von ca. 130 g/min auf die Graphitteilchen niedergeschlagen. Die so hergestellten beschichteten Graphitteilchen wurden mittels einer Nutsche von der Flüssigkeit getrennt, gewaschen, getrocknet und auf 250 µm vorgesiebt. Die Weiterverarbeitung erfolgte wie in Beispiel 3 über Einzelsintertechnik.

### Werkstoff H

Der Werkstoff H wurde wie Werkstoff G hergestellt mit dem Unterschied, dass 6 Gew.-% Graphitteilchen verwendet wurden.

### Untersuchungsmethoden

### Bestimmung des mittleren Teilchendurchmessers

Der Durchmesser der Kugel wird bei im wesentlichen kugelförmigen Teilchen als der Teilchendurchmesser definiert. Bei nicht-kugelförmigen Teilchen wird der kürzeste Durchmesser als der Teilchendurchmesser definiert. So wird beispielsweise bei faserförmigen Teilchen der Durchmesser der Faser als der Teilchendurchmesser definiert. Zur Ermittlung des mittleren Teilchendurchmessers wird der Teilchendurchmesser von mindestens 25 Teilchen beispielsweise über Mikroskopie ermittelt. Anschließend wird der Mittelwert berechnet.

### Schaltverhalten

Das Schaltverhalten der Werkstoffe wurde sowohl im Einschaltmodellschalter wie auch im Ausschaltmodellschalter untersucht.

Einschaltmodellschalter und Ausschaltmodellschalter entsprachen der in "Über den Einfluss des Herstellverfahrens auf das Schaltverhalten von Kontaktwerkstoffen der Energietechnik", Poniatowski, Schröder, Schulz; 7. Int. Tagung über elektrische Kontakte, Paris 1974 beschriebenen Testapparatur.

### Verschweißkraft

Zur Messung der Verschweißkraft beim Einschaltvorgang war die Apparatur mit einer Kraftmessdose ausgestattet, die es ermöglichte, die Kraft zu messen (als Verschweißkraft bezeichnet), die beim stromlosen Trennen einer Verschweißung aufzubringen ist.

### Spezifischer Abbrand

Der spezifische Abbrand wird jeweils durch Wägung bestimmt, indem der Masseverlust der Kontaktstücke nach einer bestimmten Anzahl von Schaltungen gemessen und durch die ebenfalls bestimmte Lichtbogenenergie dividiert wird.

### Konkrete Schaltbedingungen

| | |
|---|---|
| Einschaltversuch: | Prüfstrom = 700A, 230V, Wechselstrom 300 Schaltungen |

Messung der Verschweißkräfte mittels Kraftmessdose, Angabe des 95 %-Wertes, d.h. 95% der gemessenen Verschweißungskräfte liegen unterhalb des angegebenen Wertes

Orientierung der langgezogenen Kohlenstoff-Teilchen stets senkrecht zur Strangpressrichtung und damit zur Schaltoberfläche; Nur Material I war parallel ausgerichtet.

Bei einzelgesintertem Material ist die Schaltoberfläche stets senkrecht zur uniaxialen Pressrichtung.

| | |
|---|---|
| Ausschaltversuch: | Prüfstrom = 1300A; 230V, Wechselstrom, magnetisches Blas-feld 30 mT/kA 150 Schaltungen |

Orientierung der langgezogenen Kohlenstoff-Teilchen stets senkrecht zur Strangpressrichtung und damit zur Schaltoberfläche; Nur Material I war parallel ausgerichtet.

Bei einzelgesintertem Material ist die Schaltoberfläche stets senkrecht zur uniaxialen Pressrichtung.

### Beispiel 5

In diesem Beispiel wurde im Einschaltmodellschalter das Verschweißverhalten der durch Strangpressen bzw. Einzelsintern hergestellten Werkstoffe untersucht.

**Tabelle 1: Verschweißkraft im Einschaltmodellschalter, Probenherstellung über Strangpressen**

| Werkstoff | Verschweißkraft [N] |
|---|---|
| A1 (5% Graphit, Vergleich, SP) | 4,4 |
| A2 (5% Graphit, Vergleich, SP) | 5,0 |
| B1 (5% Graphit, NCF SP) | 1,8 |
| B2 (5% Graphit, NCF SP) | 2,2 |
| C 1 (6% Graphit, NCF SP) | 0,7 |
| C2 (6% Graphit, NCF SP) | 1,1 |
| D1 (4% Graphit + 2% Faser, NCF SP) | 2,9 |
| D2 (4% Graphit + 2% Faser, NCF SP) | 3,2 |
| E1 (7% Graphit, NCF SP) | 0,4 |
| E2 (7% Graphit, NCF SP) | 0,6 |
| I1 (5% Graphit, NCF SP, C parallel) | 0,8 |
| I2 (5% Graphit, NCF SP, C parallel) | 0,6 |

Bei gleichen Graphitgehalten ist etwa eine Halbierung der Verschweißkraft im Vergleich zum Vergleichsmaterial A1 und A2 zu beobachten (Vergleiche Proben A1 und A2 mit Proben B1 und B2). Das erfindungsgemäße Verfahren erlaubt darüber hinaus, auch höhere Graphitgehalte als 5 % einzustellen, da durch die homogene Einbettung der Kohlenstoff-Teilchen in die Silbermatrix immer noch ausreichend gute Verarbeitungseigenschaften realisiert werden können. Bei dem Vergleichsmaterial A1 und A2 sollten dagegen in der Regel keine signifikant höheren Graphitgehalte als ca. 5 % eingesetzt werden, da der dann höhere Verarbeitungsaufwand nicht durch entsprechend bessere Schalteigenschaften gerechtfertigt werden kann.

Im Gegensatz dazu lassen sich die erfindungsgemäßen Werkstoffen auch mit Graphitgehalten von 6 und 7 Gew.-% gut verarbeiten. Bei Erhöhung des Graphitgehalts sinkt die Verschweißkraft noch mal weiter ab, überraschenderweise bleibt aber der Abbrand etwa auf gleichem Niveau, während in der Fachliteratur von einer Erhöhung des Abbrands mit steigendem Kohlenstoffgehalt berichtet wird (s. Vinaricky; s. Tabelle 1). Das erfindungsgemäße Verfahren erlaubt auch, einen Teil des Graphits durch Kohlenstoffasern zu ersetzen. Die Verschweißkräfte werden dabei im Vergleich zum Vergleichswerkstoff etwas abgesenkt, ohne dass der Abbrand bei erhöhtem Kohlensstoffgehalt ansteigt (vgl. Tabelle 1 & Tabelle 3). Es ist daher auch hier möglich, höhere Kohlenstoffgehalte einzustellen und damit Silber einzusparen. Besonders interessant ist auch, dass ein erfindungsgemäßer Werkstoff positive Schaltergebnisse liefert, wenn die Schaltoberfläche parallel zur Strangpressrichtung ausgerichtet ist. In der Fachliteratur (Vinaricky, S. 252) wird bei einer solchen Ausrichtung eine ungefähre Verdopplung des Abbrandes im Vergleich zu senkrechter Ausrichtung beobachtet. Ein solcher Werkstoff hat den großen Vorteil, dass Schaltstücke aufgrund der anderen Ausrichtung mit deutlich höherer Ausbeute aus dem Strangpressstrang hergestellt werden können, als wenn die Schaltstücke mit senkrechter Orientierung zur Strangpressrichtung hergestellt werden müssen. Dies ist ökonomisch von Vorteil.

**Tabelle 2: Verschweißkraft im Einschaltmodellschalter, Probenherstellung über Einzelsintern**

| Werkstoff | Verschweißkraft [N] |
|---|---|
| F1 (5% Graphit, Vergleich, ES) | 0,7 |
| F2 (5% Graphit, Vergleich, ES) | 0,4 |
| G1 (5% Graphit, NCF ES) | 0,5 |
| G2 (5% Graphit, NCF ES) | 0,3 |
| H (6% Graphit, NCF ES) | 0,4 |
| H2 (6% Graphit, NCF ES) | 0,2 |

Bei einzelgesinterten Werkstoffen sind die Verschweißkräfte generell sehr gering, so dass hier keine markanten Unterschiede auszumachen sind. Die Vorteile des erfindungsgemäßen Verfahrens liegen hier beim vergleichsweise besseren Abbrandverhalten (s. Tabelle 4).

### Beispiel 6

In diesem Beispiel wurde das Abbrandverhalten der durch Strangpressen bzw. Einzelsintern hergestellten Werkstoffe im Einschaltmodellschalter untersucht.

**Tabelle 3: Spezifischer Abbrand im Einschaltmodellschalter; Probenherstellung über Strangpressen**

| Werkstoff | Spez. Abbrand [µg/Ws] |
|---|---|
| A1 (5% Graphit, Vergleich, SP) | 15,6 |
| A2 (5% Graphit, Vergleich, SP) | 16,3 |
| B1 (5% Graphit, NCF SP) | 14,0 |
| B2 (5% Graphit, NCF SP) | 15,5 |
| C 1 (6% Graphit, NCF SP) | 14,2 |
| C2 (6% Graphit, NCF SP) | 14,3 |
| D1 (4% Graphit + 2% Faser, NCF SP) | 18,2 |
| D2 (4% Graphit + 2% Faser, NCF SP) | 16,6 |
| E1 (7% Graphit, NCF SP) | 17,2 |
| E2 (7% Graphit, NCF SP) | 18,1 |
| I1 (5% Graphit, NCF SP, C parallel) | 16,9 |
| I2 (5% Graphit, NCF SP, C parallel) | 18,7 |

Die Abbrandfestigkeit ist zwar bei gleichem Kohlenstoffgehalt nicht besser als beim Vergleichsmaterial, aber diese Abbrandfestigkeit bleibt auch bei höheren Kohlenstoffgehalten bestehen, während im Stand der Technik berichtet wurde, dass sie sonst generell bei steigendem Kohlenstoffgehalt abnimmt (s. Vinaricky). D.h. es ist möglich die bessere Verschweißbeständigkeit der Werkstoffe mit höheren Kohlenstoffgehalten zu nutzen, ohne dass dadurch das Abbrandverhalten deutlich schlechter wird. Dazu kommt ein ökonomischer Vorteil durch Silbereinsparung. Als weiterer positiver Aspekt ist die immer noch gute Verarbeitbarkeit zu erwähnen, auch bei dem Werkstoff I mit paralleler Ausrichtung.

**Tabelle 4: Spezifischer Abbrand im Einschaltmodellschalter; Probenherstellung über Einzelsintern**

| Werkstoff | Spez. Abbrand [µg/Ws] |
|---|---|
| A1 (5% Graphit, Vergleich, ES) | 45,8 |
| A2 (5% Graphit, Vergleich, ES) | 43,0 |
| B1 (5% Graphit, NCF ES) | 33,1 |
| B2 (5% Graphit, NCF ES) | 34,6 |

Das einzelgesinterte Material zeigt generell schlechteres Abbrandverhalten als das stranggepresste Material. Die Werte in Tabelle 4 zeigen aber, dass die Verschlechterung dieser Eigenschaft bei dem erfindungsgemäßen Werkstoffen nicht so gravierende Ausmaße annimmt wie bei Vergleichsmaterial.

### Beispiel 7

In diesem Beispiel wird das Abbrandverhalten im Ausschaltmodellschalter untersucht.

**Tabelle 5: Spezifischer Abbrand im Ausschaltmodellschalter; Probenherstellung über Strangpressen**

| Werkstoff | Spez. Abbrand [µg/Ws] |
|---|---|
| A1 (5% Graphit, Vergleich, SP) | 18,9 |
| A2 (5% Graphit, Vergleich, SP) | 19,6 |
| B1 (5% Graphit, NCF SP) | 16,1 |
| B2 (5% Graphit, NCF SP) | 17,2 |
| C1 (6% Graphit, NCF SP) | 15,7 |
| C2 (6% Graphit, NCF SP) | 15,0 |
| D1 (4% Graphit + 2% Faser, NCF SP) | 14,3 |
| D2 (4% Graphit + 2% Faser, NCF SP) | 13,5 |
| E1 (7% Graphit, NCF SP) | 12,3 |
| E2 (7% Graphit, NCF SP) | 13,2 |

Im Ausschaltmodellschalter zeigt sich ein vergleichbares Bild wie beim Einschaltmodellschalter. Auch hier bleibt die Abbrandbeständigkeit bis zu höheren Kohlenstoffgehalten bestehen, bzw. verbessert sich sogar noch etwas (s. Tabelle 5).

**Tabelle 6: Spezifischer Abbrand im Ausschaltmodellschalter; Probenherstellung über Einzelsintern**

| Werkstoff | Spez. Abbrand [µg/Ws] |
|---|---|
| A1 (5% Graphit, Vergleich, ES) | 26,2 |
| A2 (5% Graphit, Vergleich, ES) | 26,0 |
| B1 (5% Graphit, NCF ES) | 18,4 |
| B2 (5% Graphit, NCF ES) | 17,2 |
| C1 (6% Graphit, NCF ES) | 20,1 |
| C2 (6% Graphit, NCF ES) | 18,2 |

Die Ergebnisse der einzelgesinterten Proben bei den Ausschaltversuchen entsprechen wieder den Tendenzen der Einschaltversuche. Der erfindungsgemäße Werkstoff ist besser als das Vergleichsmaterial. Dieser Vorteil bleibt auch bei 6 Gew.-% Kohlenstoff erhalten.

## Patentansprüche

1. Verfahren zur Herstellung eines Werkstoffs auf der Basis Silber-Kohlenstoff umfassend die Schritte:
(i) Bereitstellen einer Suspension von Kohlenstoff-Teilchen (2), und
(ii) Zuführen einer Lösung einer Silberverbindung (4') und eines Reduktionsmittels (5'), so dass ein Silber enthaltender Niederschlag auf die Kohlenstoff-Teilchen abgeschieden wird,
wobei die Kohlenstoff-Teilchen einen mittleren Durchmesser von 200 nm oder größer aufweisen.

2. Verfahren nach Anspruch 1, wobei die Lösung der Silberverbindung und das Reduktionsmittel unter Durchmischung, unter gleichzeitiger aber getrennter.Zuführung und in stöchiometrisch äquivalenten Mengen kontinuierlich über den Reaktionsverlauf hinweg zugegeben werden.

3. Verfahren nach Anspruch 1 oder 2, wobei die Silberverbindung ein Silbersalz ist, das aus der Gruppe Silbernitrat, Silberacetat, Silbercarbonat, Silbercitrat und Silberoxalat ausgewählt ist.

4. Verfahren nach einem der Ansprüche 1 bis 3, wobei das Reduktionsmittel aus der Gruppe Ascorbinsäure, Zitronensäure, Oxalsäure, Ameisensäure und Hydroxylamin ausgewählt ist.

5. Verfahren nach einem der Ansprüche 1 bis 4, wobei die Kohlenstoff-Teilchen aus Graphitpulver, Kohlenstoffasern und Ruß sowie Kombinationen davon ausgewählt sind.

6. Verfahren nach Anspruch 5, wobei die Kohlenstoff-Teilchen ein Gemisch aus Graphitpulver und/oder Ruß : Kohlenstoffasern in einem Verhältnis von 20:1 bis 1:20 sind.

7. Verfahren nach Anspruch 5 oder 6, wobei die Kohlenstoff-Teilchen 100 Gew.-% bis 98 Gew.-% Graphitpulver und 0 Gew.-% bis 2 Gew.-% Ruß (bezogen auf das Gesamtgewicht von Graphitpulver und Ruß) in Kombination mit Kohlenstoffasern sind.

8. Verfahren nach Anspruch 5, wobei die Kohlenstoff-Teilchen Kohlenstoffasern sind.

9. Verfahren nach Anspruch 8, wobei die Kohlenstoffasern einen Durchmesser von 0,5 µm bis 30 µm aufweisen und die Länge mindestens zweimal so groß wie der Durchmesser ist.

10. Verfahren nach einem der Ansprüche 1 bis 9, wobei der mittlere Teilchendurchmesser der Kohlenstoff-Teilchen 0,2 µm bis 15 µm beträgt.

11. Verfahren nach einem der Ansprüche 1 bis 10, wobei die Anteile an Silberverbindung, Kohlenstoff-Teilchen und weitere Komponenten so gewählt sind, dass in dem Werkstoff 0,5 bis 10 Gew.-% Kohlenstoff, 0 bis 1 Gew.-% weitere Komponenten, Rest Silber vorliegen.

12. Verfahren nach einem der Ansprüche 1 bis 11, wobei die in Schritt (ii) erhaltenen beschichten Kohlenstoff-Teilchen kaltisostatisch gepresst, gesintert und stranggepresst werden.

13. Verfahren nach einem der Ansprüche 1 bis 11, wobei die in Schritt (ii) erhaltenen beschichten Kohlenstoff-Teilchen durch Einzelsintern zu dem Werkstoff verarbeitet werden.

14. Werkstoff erhältlich nach einem Verfahren gemäß einem der Ansprüche 1 bis 13.

15. Werkstoff nach Anspruch 14, wobei der Werkstoff ein Kontaktwerkstoff ist.

16. Werkstoff nach Anspruch 14 oder 15, wobei der Werkstoff aus 0,5 bis 10 Gew.-% Kohlenstoff, 0 bis 1 Gew.-% weitere Komponenten, Rest Silber besteht.

17. Werkstoff nach Anspruch 16, wobei der Werkstoff von 2 bis 8 Gew.-% Kohlenstoff enthält.

18. Verwendung des Werkstoffs nach einem der Ansprüche 14 bis 17 in Schutzschaltern für die Niederspannungsenergietechnik.

## Claims

1. Process for producing a material based on silvercarbon, comprising the steps of:
(i) providing a suspension of carbon particles (2); and
(ii) supplying a solution of a silver compound (4') and of a reducing agent (5'), such that a silver-containing precipitate is deposited onto the carbon particles,
where the carbon particles have a mean diameter of 200 nm or greater.

2. Process according to Claim 1, wherein the solution of the silver compound and the reducing agent are added continuously over the course of the reaction with mixing, with simultaneous but separate supply and in stoichiometrically equivalent amounts.

3. Process according to Claim 1 or 2, wherein the silver compound is a silver salt which is selected from the group of silver nitrate, silver acetate, silver carbonate, silver citrate and silver oxalate.

4. Process according to one of Claims 1 to 3, wherein the reducing agent is selected from the group of ascorbic acid, citric acid, oxalic acid, formic acid and hydroxylamine.

5. Process according to one of Claims 1 to 4, wherein the carbon particles are selected from graphite powder, carbon fibers and carbon black, and combinations thereof.

6. Process according to Claim 5, wherein the carbon particles are a mixture of graphite powder and/or carbon black: carbon fibers in a ratio of from 20:1 to 1:20.

7. Process according to Claim 5 or 6, wherein the carbon particles are from 100% by weight to 98% by weight of graphite powder and from 0% by weight to 2% by weight of carbon black (based on the total weight of graphite powder and carbon black) in combination with carbon fibers.

8. Process according to Claim 5, wherein the carbon particles are carbon fibers.

9. Process according to Claim 8, wherein the carbon fibers have a diameter of from 0.5 µm to 30 µm and the length is at least twice as great as the diameter.

10. Process according to one of Claims 1 to 9, wherein the mean particle diameter of the carbon particles is from 0.2 µm to 15 µm.

11. Process according to one of Claims 1 to 10, wherein the proportions of silver compound, carbon particles and further components are selected such that from 0.5 to 10% by weight of carbon, from 0 to 1% by weight of further components, remainder silver are present in the material.

12. Process according to one of Claims 1 to 11, wherein the coated carbon particles obtained in step (ii), under cold isostatic conditions, are pressed, sintered and extruded.

13. Process according to one of Claims 1 to 11, wherein the coated carbon particles obtained in step (ii) are processed to give the material by individual sintering.

14. Material obtainable by a process according to one of Claims 1 to 13.

15. Material according to Claim 14, which is a contact material.

16. Material according to Claim 14 or 15, which consists of from 0.5 to 10% by weight of carbon, from 0 to 1% by weight of further components, remainder silver.

17. Material according to Claim 16, which contains from 2 to 8% by weight of carbon.

18. Use of the material according to one of Claims 14 to 17 in circuit breakers for low-voltage power engineering.

## Revendications

1. Procédé de fabrication d'un matériau à base d'argent-carbone, comprenant les étapes :
(i) préparation d'une suspension de particules de carbone (2), et
(ii) alimentation d'une solution d'un composé d'argent (4') et d'un agent de réduction (5') de manière telle qu'un précipité contenant de l'argent est déposé sur les particules de carbone,
les particules de carbone présentant un diamètre moyen de 200 nm ou plus.

2. Procédé selon la revendication 1, où la solution du composé d'argent et l'agent de réduction sont ajoutés en mélangeant, avec une alimentation simultanée mais séparée et en des quantités stoechiométriquement équivalentes, en continu, pendant tout le déroulement de la réaction.

3. Procédé selon la revendication 1 ou 2, où le composé d'argent est un sel d'argent, qui est choisi dans le groupe formé par le nitrate d'argent, l'acétate d'argent, le carbonate d'argent, le citrate d'argent et l'oxalate d'argent.

4. Procédé selon l'une quelconque des revendications 1 à 3, où l'agent de réduction est choisi dans le groupe formé par l'acide ascorbique, l'acide citrique, l'acide oxalique, l'acide formique et l'hydroxylamine.

5. Procédé selon l'une quelconque des revendications 1 à 4, où les particules de carbone sont choisies parmi la poudre de graphite, les fibres de carbone et la suie ainsi que leurs combinaisons.

6. Procédé selon la revendication 5, où les particules de carbone sont un mélange de poudre de graphite et/ou de suie:fibres de carbone dans un rapport de 20:1 à 1:20.

7. Procédé selon la revendication 5 ou 6, où les particules de carbone sont constituées par 100% en poids à 98% en poids de poudre de graphite et 0% en poids à 2% en poids de suie (par rapport au poids total de la poudre de graphite et de la suie) en combinaison avec des fibres de carbone.

8. Procédé selon la revendication 5, où les particules de carbone sont des fibres de carbone.

9. Procédé selon la revendication 8, où les fibres de carbone présentent un diamètre de 0,5 µm à 30 µm et la longueur est au moins deux fois plus grande que le diamètre.

10. Procédé selon l'une quelconque des revendications 1 à 9, où le diamètre moyen des particules de carbone est de 0,2 µm à 15 µm.

11. Procédé selon l'une quelconque des revendications 1 à 10, où les proportions de composé d'argent, de particules de carbone et d'autres composants sont choisies de manière telle que le matériau contient 0,5 à 10% en poids de carbone, 0 à 1% en poids d'autres composants, le reste étant de l'argent.

12. Procédé selon l'une quelconque des revendications 1 à 11, où les particules de carbone revêtues obtenues dans l'étape (ii) sont pressées de manière isostatique à froid, frittées et extrudées.

13. Procédé selon l'une quelconque des revendications 1 à 11, où les particules de carbone revêtues obtenues dans l'étape (ii) sont transformées par frittage en ledit matériau.

14. Matériau pouvant être obtenu selon un procédé selon l'une quelconque des revendications 1 à 13.

15. Matériau selon la revendication 14, où le matériau est un matériau de contact.

16. Matériau selon la revendication 14 ou 15, où le matériau est constitué par 0,5 à 10% en poids de carbone, 0 à 1% en poids d'autres composants, le reste étant de l'argent.

17. Matériau selon la revendication 16, où le matériau contient 2 à 8% en poids de carbone.

18. Utilisation du matériau selon l'une quelconque des revendications 14 à 17 dans des tableaux de disjoncteurs pour la technique d'énergie basse tension.
